# EUROPEAN PATENT APPLICATION

(11) **EP 4 105 896 A2**
(43) Date of publication of application: **21.12.2022**
(21) Application number: 22204132.9
(22) Date of filing: 27.10.2022
(51) Int. Cl.: G06V 30/40

(54) **METHOD, APPARATUS AND PLATFORM OF GENERATING DOCUMENT, ELECTRONIC DEVICE, STORAGE MEDIUM AND PROGRAM PRODUCT**

(30) Priority: 27.10.2021 CN 202111260590
(71) Applicant: Beijing Baidu Netcom Science Technology Co., Ltd., Beijing 100085 (CN)
(72) Inventor: XIE, Qunyi, Beijing, 100085 (CN); QIN, Xiameng, Beijing, 100085 (CN); EN, Mengyi, Beijing, 100085 (CN); ZHANG, Dongdong, Beijing, 100085 (CN); HUANG, Ju, Beijing, 100085 (CN); XU, Yangliu, Beijing, 100085 (CN); CHEN, Yi, Beijing, 100085 (CN); YAO, Kun, Beijing, 100085 (CN)
(74) Representative: Stöckeler, Ferdinand

(57) **Abstract**

A method, an apparatus and a platform of generating a document, an electronic device, a storage medium, and a program product are provided, which relate to a field of an artificial intelligence technology, in particular to fields of computer vision and deep learning technologies, and may be applied to a text recognition scenario and other scenarios. The method includes: performing a category recognition on a document picture to obtain a target category result; determining a target structured model matched with the target category result; and performing, by using the target structured model, a structure recognition on the document picture to obtain a structure recognition result, so as to generate an electronic document based on the structure recognition result, wherein the structure recognition result includes a field attribute recognition result and a field position recognition result.

## Description

### TECHNICAL FIELD

The present disclosure relates to a field of an artificial intelligence technology, in particular to fields of computer vision and deep learning technologies, and may be applied to a text recognition scenario and other scenarios. Specifically, the present disclosure relates to a method, an apparatus and a platform of generating a document, an electronic device, a storage medium, and a program product.

### BACKGROUND

A demand for an electronization of paper document, such as an electronic entry, storage and management of a voucher, a certificate, a business bill and other documents, widely exists in daily production and life. An OCR (Optical Character Recognition) technology brings an unprecedented change to the electronization of paper document, improves a processing efficiency of the electronization, and liberates manpower. However, a requirement for the OCR technology is constantly improving with a continuous increase of types of paper documents.

### SUMMARY

The present disclosure provides a method, an apparatus and a platform of generating a document, an electronic device, a storage medium, and a program product.

According to an aspect of the present disclosure, a method of generating a document is provided, including: performing a category recognition on a document picture to obtain a target category result; determining a target structured model matched with the target category result; and performing, by using the target structured model, a structure recognition on the document picture to obtain a structure recognition result, so as to generate an electronic document based on the structure recognition result, wherein the structure recognition result includes a field attribute recognition result and a field position recognition result.

According to another aspect of the present disclosure, an apparatus of generating a document is provided, including: a category recognition module configured to perform a category recognition on a document picture to obtain a target category result; a model matching module configured to determine a target structured model matched with the target category result; and a structure recognition module configured to perform, by using the target structured model, a structure recognition on the document picture to obtain a structure recognition result, so as to generate an electronic document based on the structure recognition result, wherein the structure recognition result includes a field attribute recognition result and a field position recognition result.

According to another aspect of the present disclosure, a platform of generating a document is provided, including: a platform layer configured to train an initial document generation network by using training data, so as to obtain a document generation network, wherein the document generation network is configured to perform a category recognition on a document picture to be processed so as to obtain an application target category result, determine a target structured model matched with the application target category result, and perform, by using the target structured model, a structure recognition on the document picture to be processed so as to obtain an application structure recognition result, wherein the application structure recognition result includes an application field attribute recognition result and an application field position recognition result; an atomic model layer configured to construct the initial document generation network; and a service layer configured to receive the document picture to be processed from a terminal device.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method described above.

According to another aspect of the present disclosure, a non-transitory computer-readable storage medium having computer instructions therein is provided, and the computer instructions are configured to cause a computer system to implement the method described above.

According to another aspect of the present disclosure, a computer program product containing a computer program is provided, and the computer program, when executed by a processor, causes the processor to implement the method described above.

It should be understood that content described in this section is not intended to identify key or important feature in embodiments of the present disclosure, nor is it intended to limit the scope of the present disclosure. Other feature of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 schematically shows an exemplary application scenario of a method and an apparatus of generating a document according to embodiments of the present disclosure;
FIG. 2 schematically shows a flowchart of a method of generating a document according to embodiments of the present disclosure;
FIG. 3 schematically shows a flowchart of obtaining a target category result according to embodiments of the present disclosure;
FIG. 4 schematically shows a flowchart of performing an image correction according to embodiments of the present disclosure;
FIG. 5 schematically shows a flowchart of obtaining a structure recognition result according to embodiments of the present disclosure;
FIG. 6 schematically shows a flowchart of a method of generating a document according to other embodiments of the present disclosure;
FIG. 7 schematically shows a block diagram of a platform of generating a document according to embodiments of the present disclosure;
FIG. 8 schematically shows a block diagram of an apparatus of generating a document according to embodiments of the present disclosure; and
FIG. 9 schematically shows a block diagram of an electronic device suitable for implementing a method of generating a document according to embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The present disclosure provides a method, an apparatus and a platform of generating a document, an electronic device, a storage medium, and a program product.

According to embodiments of the present disclosure, the method of generating the document may include: performing a category recognition on a document picture to obtain a target category result; determining a target structured model matched with the target category result; and performing a structure recognition on the document picture by using the target structured model to obtain a structure recognition result, so as to generate an electronic document based on the structure recognition result, where the structure recognition result includes a field attribute recognition result and a field position recognition result.

In the technical solution of the present disclosure, the collection, storage, use, processing, transmission, provision, disclosure and application of information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

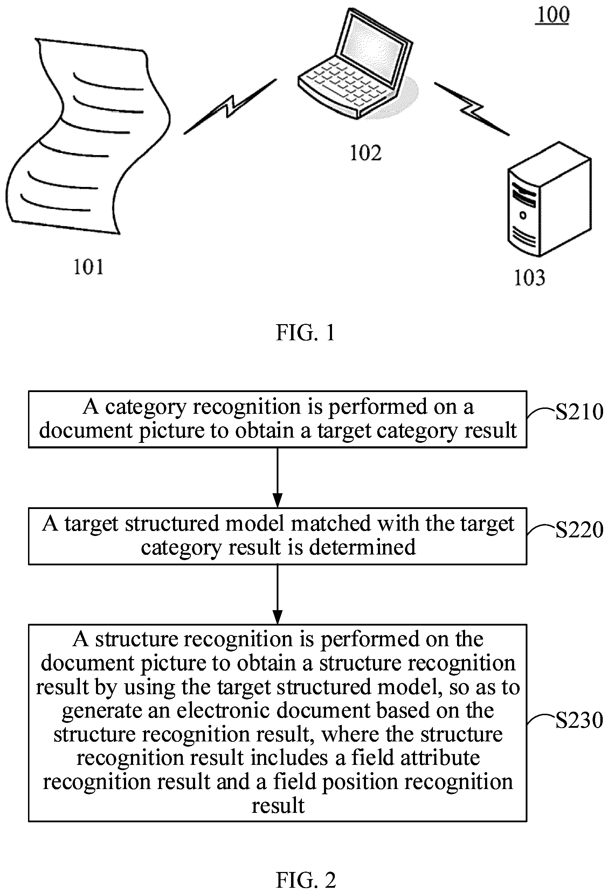

FIG. 1 schematically shows an exemplary application scenario of a method and an apparatus of generating a document according to embodiments of the present disclosure.

It should be noted that FIG. 1 is only an example of an application scenario to which embodiments of the present disclosure may be applied to help those skilled in the art understand the technical content of the present disclosure, but it does not mean that embodiments of the present disclosure may not be applied to other devices, systems, environments or scenarios.

As shown in FIG. 1, a paper document may be converted into a document picture 101 by an electronic apparatus such as a scanner or a digital camera, and an object image of the document picture 101 may include a character printed on the paper document.

It is possible to translate the object image of the document picture 101 into computer data to obtain an electronic document, by using the method of generating the document provided by embodiments of the present disclosure.

The method of generating the document provided by embodiments of the present disclosure may generally be performed by a terminal device 102. Accordingly, the apparatus of generating the document provided by embodiments of the present disclosure may also be provided in the terminal device 102. According to embodiments of the present disclosure, the electronic apparatus is communicatively connected to the terminal device 102, and the document picture 101 may be transmitted to the terminal device 102 via the electronic apparatus.

Alternatively, the method of generating the document provided by embodiments of the present disclosure may also be generally performed by a server 103. Accordingly, the apparatus of generating the document provided by embodiments of the present disclosure may generally be provided in the server 103. The method of generating the document provided by embodiments of the present disclosure may also be performed by a server or server cluster different from the server 103 and capable of communicating with the terminal device 102 and/or the server 103. Accordingly, the apparatus of generating the document provided by embodiments of the present disclosure may also be provided in a server or server cluster different from the server 103 and capable of communicating with the terminal device 102 and/or the server 103. According to embodiments of the present disclosure, the electronic apparatus is communicatively connected to the terminal device 102, and the document picture 101 may be transmitted to the terminal device 102 via the electronic apparatus, and uploaded to the server 103 via the terminal device 102.

According to embodiments of the present disclosure, the terminal device 102 may be various electronic devices having a display screen and supporting web browsing, including but not limited to smart phones, tablet computers, laptop computers, desktop computers, and the like.

According to embodiments of the present disclosure, the server 103 may be a server that provides various services, such as a background management server (for example only) that performs the method of generating the document on the document picture transmitted by the user using the terminal device 102.

It should be understood that the number of electronic device, terminal device, network and server shown in FIG. 1 are merely illustrative. According to implementation needs, any number of terminal devices, networks and servers may be provided.

FIG. 2 schematically shows a flowchart of a method of generating a document according to embodiments of the present disclosure.

As shown in FIG. 2, the method includes operations S210 to S230.

In operation S210, a category recognition is performed on a document picture to obtain a target category result.

In operation S220, a target structured model matched with the target category result is determined.

In operation S230, a structure recognition is performed on the document picture to obtain a structure recognition result by using the target structured model, so as to generate an electronic document based on the structure recognition result, where the structure recognition result includes a field attribute recognition result and a field position recognition result.

According to embodiments of the present disclosure, the document picture may be a picture of a paper document. For example, the document picture may be a picture obtained by collecting an information in the paper document, and the object image of the document picture may have a same content as a text content in the paper document.

According to embodiments of the present disclosure, a category of the document picture may refer to a category of the paper document, which may be, for example, an identity card or a bank card. However, the category is not limited to this, and may also be a receipt, a contract, and other categories.

According to embodiments of the present disclosure, different categories of document pictures may have different field structures, such as field attributes and field positions. A category recognition may be performed on the document picture to obtain a target category result, and then a subsequent method of processing the document picture may be determined. For example, it is possible to determine a target structured model based on the target category result. Therefore, the processing of the document picture may be more targeted.

According to embodiments of the present disclosure, the target structured model may be a structured model matched with the target category result. A plurality of structured models may be obtained by pre-training, and the plurality of structured models may correspond to a plurality of different categories of document pictures one by one.

According to embodiments of the present disclosure, the structured model may be used to perform a structure recognition on the document picture to obtain a structure recognition result, such as a field attribute recognition result and a field position recognition result.

According to embodiments of the present disclosure, the object image of the document picture generally contains data of a plurality of field structures. For example, an object image of a document picture of an identity card generally includes a name field, an identity number field, an address field, a validity term field, and other different attribute fields. Different fields may be distinguished through the structure recognition, and an importance level may be determined based on the field attribute recognition result, for example, it may be distinguished that whether a field is required or optional. In addition, the field position recognition result may be obtained through the structure recognition, and a corresponding field text may be easily extracted using the field recognition result, so that the extracting of data may be more targeted.

According to embodiments of the present disclosure, the field attribute recognition result and the field position recognition result may be determined based on the structure recognition. The electronic document is finally generated by using the field attribute recognition result and the field position recognition result, so as to obtain data that may be processed by a computer, which is convenient for storage and application.

According to embodiments of the present disclosure, the target structured model is determined from the plurality of structured models by using the target category result, and the model matched with a structure recognition method of the document picture may be clearly determined without a manual intervention, so as to liberate manpower, improve a processing efficiency, and improve a recognition accuracy.

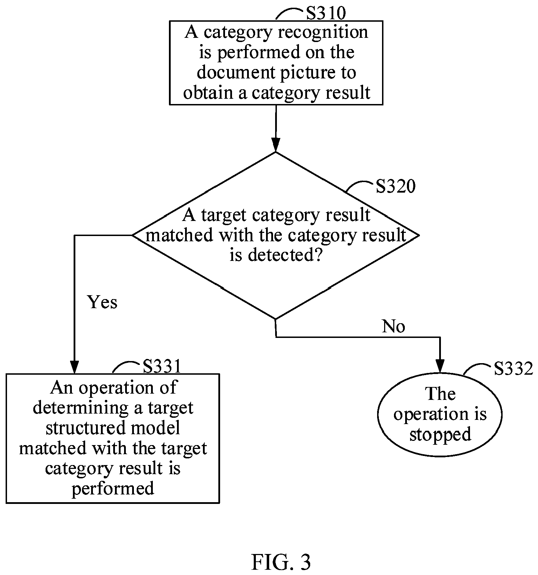

The method shown in FIG. 2 will be further described below with reference to FIG. 3 to FIG. 6 in conjunction with specific embodiments.

FIG. 3 schematically shows a flowchart of obtaining a target category result according to embodiments of the present disclosure.

As shown in FIG. 3, the operation S210 of performing the category recognition on the document picture to obtain the target category result may include operations S310, S320, S331, and S332.

In operation S310, a category recognition is performed on the document picture to obtain a category result.

In operation S320, a target category result matched with the category result is recognized from at least one template category.

In operation S331, an operation of determining a target structured model matched with the target category result is performed in response to determining that the target category result is detected.

In operation S332, the operation is stopped in response to determining that no target category result is detected.

According to embodiments of the present disclosure, a set of template categories may be preset, and the set of template categories includes at least one template category. The at least one template category may correspond to at least one category of at least one document picture one by one.

According to embodiments of the present disclosure, the document picture may be a picture of a paper document, but is not limited thereto, and may also be a picture of an electronic document. The category of the document picture may be the same as a category of the corresponding paper document or a category of the corresponding electronic document. For example, it may be at least one selected from a contract, a receipt, an invoice, a certificate, a record, a file, a leaflet, or other categories.

According to embodiments of the present disclosure, different categories of document pictures may have different field structures. For example, a field attribute and a field position in a document picture of an identity card are different from a field attribute and a field position in a document picture of a contract. Therefore, at least one template category may be preset to be in one-to-one correspondence with at least one structured model. Each template category is configured with a corresponding structured model. In other words, corresponding structured models are configured for different categories of document pictures to perform structure recognition processing. Furthermore, the target structured model is determined using the target category result, and the structure recognition operation is performed using the target structured model, so that the method is more targeted and a problem of a low recognition accuracy caused by the use of a general model may be avoided.

According to embodiments of the present disclosure, in a case that no target category result is detected, an operation of rejecting recognition may be performed, that is, an execution of the subsequent structure recognition operation is stopped, so as to improve the processing efficiency.

According to embodiments of the present disclosure, an object classification model may be used to perform the category recognition on the document picture to obtain the target category result.

According to embodiments of the present disclosure, a network architecture of the object classification model is not limited. For example, the object classification model may be obtained using a convolutional neural network (CNN) as a core network in combination with a bidirectional long short-term memory network (BiLSTM). However, the present disclosure is not limited to this, as long as the model may use the document picture as input data and use the target category result as output data.

According to embodiments of the present disclosure, a preprocessing operation of an image correction may be performed before performing the operation S220 of determining the target structured model matched with the target category result. For example, an image direction of the document picture may be recognized. If the image direction is not matched with a target direction, a rotation correction may be performed on the document picture. If the image direction is matched with the target direction, the subsequent operation S220 may be performed directly.

According to embodiments of the present disclosure, the image direction may refer to a direction of a character in the object image of the document picture.

According to embodiments of the present disclosure, the target direction may refer to a predetermined direction. For example, a predetermined horizontal direction or vertical direction may be the target direction.

According to exemplary embodiments of the present disclosure, a readable direction of a predetermined character, such as a horizontal direction, may be the target direction.

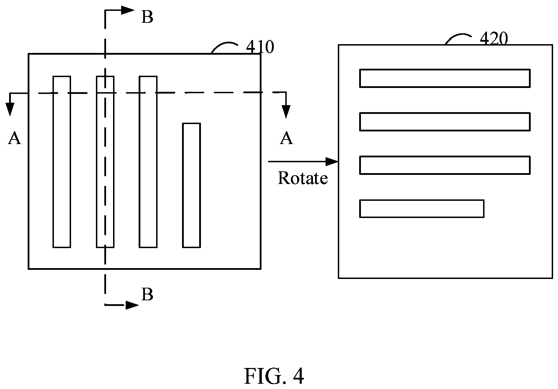

FIG. 4 schematically shows a flowchart of performing an image correction according to embodiments of the present disclosure.

As shown in FIG. 4, the image direction may refer to a direction of a character in the object image of the document picture. An image direction B-B of a document picture 410 may be recognized and determined, and a predetermined horizontal direction is a target direction A-A. In a case that the image direction B-B is not matched with the target direction A-A, for example, if the image direction B-B is at an angle of 90 degrees with the target direction A-A, a rotation correction may be performed on the document picture 410 to obtain a rotation-corrected document picture 420, so that an image direction of the rotation-corrected document picture 420 is consistent with the target direction. In a case that the image direction is matched with the target direction, it indicates that the image direction is consistent with the target direction, and the subsequent operation may be performed directly.

It should be noted that the preprocessing operation of the image correction may be performed after the category recognition operation is performed or before the category recognition operation is performed, as long as it is performed before determining the target structured model matched with the target category result.

According to exemplary embodiments of the present disclosure, the image direction of the document picture may be recognized by using a direction determination model. For example, the direction determination model may be used to recognize the image direction of the document picture to obtain an angle result of the image direction relative to the target direction, for example, an angle result of 0 degree, 90 degrees, 180 degrees, 270 degrees, or the like. The rotation correction may be performed on the document picture according to the angle result, so as to obtain the rotation-corrected document picture.

According to embodiments of the present disclosure, a network architecture of the direction determination model is not limited, for example, an affine transform function in an OpenCV algorithm may be used. However, the present disclosure is not limited to this, and it is also possible to combine the OpenCV algorithm with a Python algorithm, as long as the model may use the document picture as input data and use the rotation-corrected document picture as output data.

With the preprocessing operation of the image correction provided by embodiments of the present disclosure, it is possible to avoid a problem of a reduction of an accuracy of the subsequent structure recognition caused by a fact that the image direction of the document picture is not conductive to a character recognition.

It should be noted that, in embodiments of the present disclosure, the method of generating the document is not limited to including the preprocessing operation of the rotation correction, but may also include a transformation correction. For example, images with different degrees of angle inclination may be processed through a pre-processing operation of transformation correction, so as to reduce an interference caused by the angle inclination.

According to exemplary embodiments of the present disclosure, a preprocessing operation of cropping may also be performed.

For example, before the operation S210 of performing the category recognition on the document picture to obtain the category result: an object detection may be performed on an initial picture to obtain an object position result, and the document picture may be obtained from the initial picture based on the object position result.

According to embodiments of the present disclosure, the object detection may refer to detecting an object image of the initial picture. For example, an initial picture of an identity card may be obtained by capturing an image of an identity card using a camera, and a large number of unnecessary regions may exist around the image of the identity card. For another example, reserved blank regions may exist on both sides of a text and above and below the text in an initial picture of a contract. Through the object detection, an object image region having a character may be distinguished from an unnecessary region.

According to embodiments of the present disclosure, for example, the object image region having a character may be used as the object position result.

According to embodiments of the present disclosure, based on the object position result, the document picture may be obtained from the initial picture by means of cropping, and the initial picture may be cropped without manual intervention to remove the unnecessary region, so that a background interference may be eliminated, a complexity of image processing may be reduced, and the category of the document picture may be recognized more accurately.

According to exemplary embodiments of the present disclosure, the object detection may be performed on the initial picture by using an object detection model to obtain the object position result, and the document picture may be obtained from the initial picture based on the object position result.

According to embodiments of the present disclosure, a network architecture of the object detection model is not limited, for example, an OpenCV algorithm may be used. However, the present disclosure is not limited to this, and a general algorithm such as Python and Ruby may also be used, as long as the model may use the initial picture as input data and use the document picture as output data.

According to embodiments of the present disclosure, the operation S230 of performing the structure recognition on the document picture by using the target structured model so as to obtain the structure recognition result may be performed through the following operations.

For example, the structure recognition may be performed on the document picture by using a target structured model, and the structure recognition result may be determined from a plurality of initial field structures.

According to embodiments of the present disclosure, the target structured model may be a structured model matched with the target category result. A plurality of structured models may be obtained by pre-training, and the plurality of structured models may correspond to a plurality of different categories of document pictures one by one.

According to embodiments of the present disclosure, the structured model may be used to perform the structure recognition on the document picture to obtain the structure recognition result, such as a field attribute recognition result and a field position recognition result.

According to embodiments of the present disclosure, a network architecture of the structured model is not limited, for example, a structured model obtained by CTPN (Connectionist Text Proposal Network) may be used. However, the present disclosure is not limited to this, and the structured model may also be a structured model obtained by combining a convolutional neural network and an RPN network (Region Proposal Network), as long as the model may use the document picture or the rotation-corrected document picture as input data and use the structured recognition result as output data.

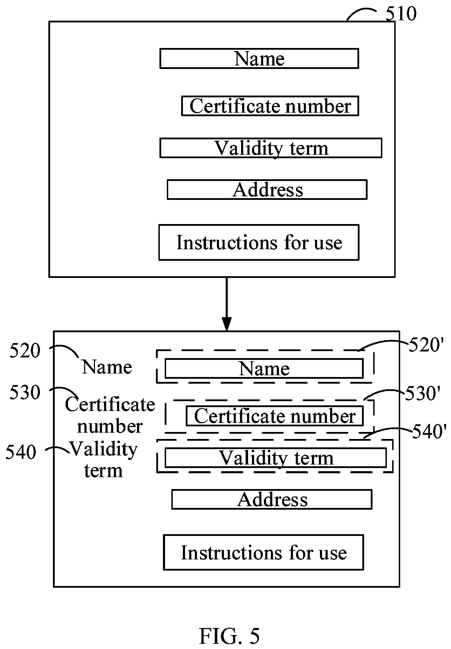

FIG. 5 schematically shows a flowchart of obtaining a structure recognition result according to embodiments of the present disclosure.

As shown in FIG. 5, a structure recognition is performed on an object image of a certificate document picture 510 by using a target structured model. The object image may include a plurality of initial field structures, and the initial field structures may include a field attribute and a field position. The field attribute may be a field category, such as a certificate name field, a certificate number field, a validity term field, an address field, and an instruction for use field. The structure recognition result may be determined from the plurality of initial field structures. The structure recognition result includes a field attribute recognition result and a field position recognition result. The field attribute recognition result may include a label 520 of the certificate name field, a label 530 of the certificate number field, and a label 540 of the validity term field. The field position recognition result may be a position marking result corresponding to the field attribute recognition result, such as a position box 520' of the certificate name field, a position box 530' of the certificate number field, and a position box 540' of the validity term field.

According to embodiments of the present disclosure, a key content and a target content may be recognized and determined from the document picture by using the target structured model. For example, a field text required to generate an electronic document may be determined through the target structured model without manual intervention. In addition, the field attribute recognition result and the field position recognition result may provide a basis for subsequent field text extraction and text recognition, and therefore a coherent processing flow may be formed.

According to embodiments of the present disclosure, the following operation may be performed after the operation S230 of performing the structure recognition on the document picture by using the target structured model so as to obtain the structure recognition result.

For example, a target field text may be extracted based on the field position recognition result; and a text recognition may be performed on the target field text to obtain a text recognition result.

According to embodiments of the present disclosure, a text recognition model may be used to extract the target field text and perform the text recognition on the target field text, so as to obtain the text recognition result. For example, the corresponding image region acquired based on the field position recognition result may be input into the text recognition model to obtain the text recognition result. According to embodiments of the present disclosure, an electronic document may be generated based on the text recognition result. The electronic document may be stored in a centralized manner, which makes searching convenient and fast, and effectively prevents the document from being damaged and lost.

According to embodiments of the present disclosure, a network architecture of the text recognition model is not limited. For example, the text recognition model may be obtained using a convolutional neural network (CNN) as a core network in combination with an activation function such as softmax. However, the present disclosure is not limited to this, and the text recognition model may also be obtained by combining a convolutional neural network and a recurrent neural network (RNN), as long as the model may use the corresponding image region acquired based on the field position recognition result as input data and use the text recognition result as output data.

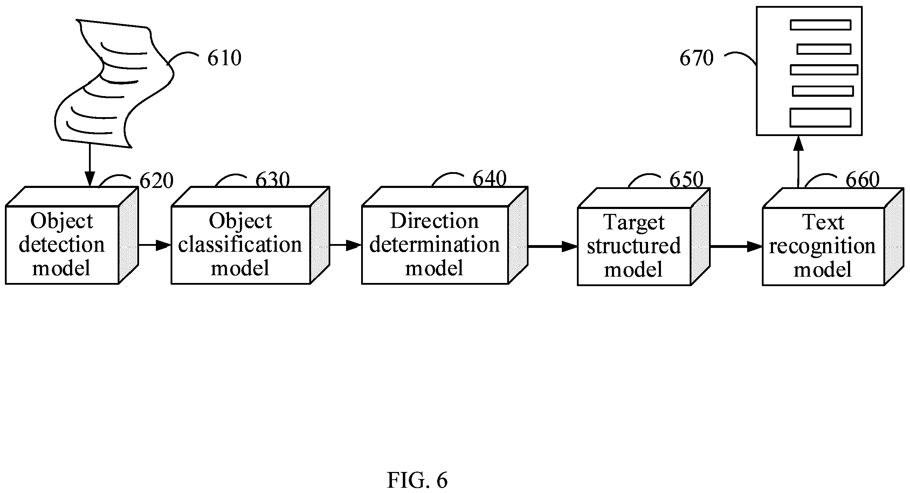

FIG. 6 schematically shows a flowchart of a method of generating a document according to other embodiments of the present disclosure.

As shown in FIG. 6, a document picture 610 may be used as input data to be sequentially processed by an object detection model 620, an object classification model 630, a direction determination model 640, a target structured model 650, and a text recognition model 660. Then, data that may be recognized and processed by a computer may be obtained, and an electronic document 670 may be generated.

According to embodiments of the present disclosure, an end-to-end document generation processing model is generated from the above-mentioned five models to form a pipeline mode, so as to achieve robustness and efficiency of a document generation.

According to embodiments of the present disclosure, the object detection model, the object classification model, the direction determination model, the target structured model, and the text recognition model may be separately trained and tested. A unified training sample including various categories of document pictures may be provided. After the models are trained, the trained models may be used as application models. Each model may be loaded into a terminal device, so that the terminal device may perform the method of generating the document.

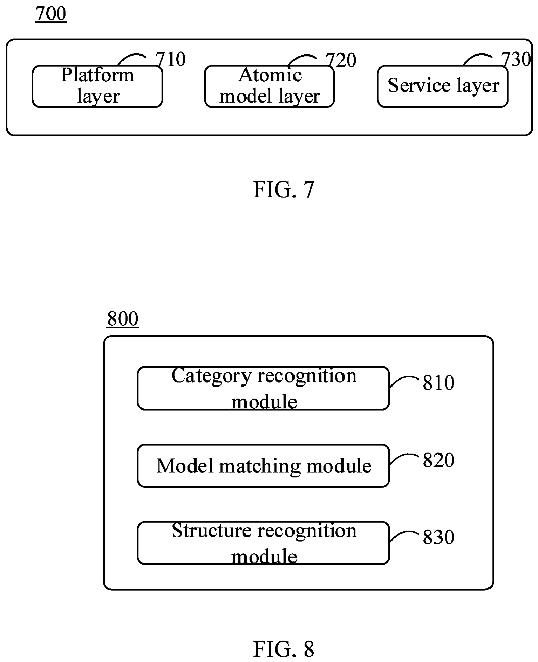

FIG. 7 schematically shows a block diagram of a platform of generating a document according to embodiments of the present disclosure.

As shown in FIG. 7, a platform 700 of generating a document may include a platform layer 710, an atomic model layer 720, and a service layer 730.

The platform layer 710 is used to train an initial document generation network by using training data, so as to obtain a document generation network. The document generation network may be used to: perform a category recognition on a document picture to be processed, so as to obtain an application target category result; determine a target structured model matched with the application target category result; and perform, by using the target structured model, a structure recognition on the document picture to be processed so as to obtain an application structure recognition result. The application structure recognition result includes an application field attribute recognition result and an application field position recognition result.

The atomic model layer 720 is used to construct the initial document generation network.

The service layer 730 is used to receive the document picture to be processed from the terminal device.

According to embodiments of the present disclosure, the atomic model layer may be a bottom layer of the platform of generating a document, which may construct the initial document generation network. The initial document generation network may include an initial object detection model, an initial object classification model, an initial direction determination model, an initial target structured model, and an initial text recognition model.

According to embodiments of the present disclosure, the initial object detection model may be used to perform an object detection on an initial sample picture to obtain a sample object position result, and obtain a sample document picture from the initial sample picture based on the sample object position result by means of, for example, cropping .

According to embodiments of the present disclosure, the initial object classification model may be used to perform a category recognition on the sample document picture to obtain a sample target category result.

According to embodiments of the present disclosure, the initial direction determination model may be used to recognize an image direction of the sample document picture to obtain a sample angle result of the image direction relative to a target direction, and perform a rotation correction on the sample document picture according to the sample angle result, so as to obtain a rotation-corrected sample document picture.

According to embodiments of the present disclosure, the initial target structured model may be used to perform a structure recognition on the sample document picture, and determine a sample structure recognition result from a plurality of initial sample field structures.

According to embodiments of the present disclosure, the initial text recognition model may be used to extract a sample target field text based on the sample structure recognition result, and perform a text recognition on the sample target field text to obtain a sample text recognition result.

With the atomic model layer provided by embodiments of the present disclosure, it is possible to construct various categories of initial structured models to process different categories of sample document pictures, such as a contract, a receipt, an invoice, a certificate, a record, a file, a leaflet, and other categories, so as to provide more targeted document generation services for different document pictures to be processed.

According to embodiments of the present disclosure, the platform layer may be a middle layer of the platform of generating a document. The platform layer may include a module tool, a service tool and other tools.

According to embodiments of the present disclosure, the module tool may include a data parsing tool, a model training tool, a model testing tool, and the like. The data parsing tool may parse a data category of training data, and call a parsing model training tool to start a model training according to a parsing result. For example, an initial target structured model corresponding to a data category may be determined according to different data categories, such as different categories of sample document pictures. The model training tool is used to train the initial document generation network by using the training data such as the sample document picture. The model testing tool is used to separately test the trained document generation network by using a test set, so as to determine a trained document generation network with a good performance.

According to embodiments of the present disclosure, the service tool may be a dynamically configurable service tool, which may provide end-to-end model training and testing services, and may also provide an end-to-end document generation service using the document generation network optimized by the module tool.

According to embodiments of the present disclosure, the platform layer may encapsulate a plurality of tools, such as the module tool and the service tool, to form a pipeline, and then provide efficient data processing ability, model training ability and service development ability through the pipeline.

According to embodiments of the present disclosure, the service layer may be a top layer of the platform of generating a document. The service layer may be used to receive the document picture to be processed from the terminal device, and externally support document generation services for different categories of document pictures to be processed. The categories of the document pictures to be processed may include, for example, a contract, a receipt, an invoice, a certificate, a record, a file, a leaflet, and the like.

With the platform of generating a document provided by embodiments of the present disclosure, it is possible to achieve a data management, an end-to-end model training, a service deployment, and the like, and a user experience may be improved.

FIG. 8 schematically shows a block diagram of an apparatus of generating a document according to embodiments of the present disclosure.

As shown in FIG. 8, an apparatus 800 of generating a document may include a category recognition module 810, a model matching module 820, and a structure recognition module 830.

The category recognition module 810 may be used to perform a category recognition on a document picture to obtain a target category result.

The model matching module 820 may be used to determine a target structured model matched with the target category result.

The structure recognition module 830 may be used to perform, by using the target structured model, a structure recognition on the document picture to obtain a structure recognition result, so as to generate an electronic document based on the structure recognition result, and the structure recognition result includes a field attribute recognition result and a field position recognition result.

According to embodiments of the present disclosure, the category recognition module may include a category recognition unit, a matching unit, and an execution unit.

The category recognition unit may be used to perform a category recognition on the document picture to obtain a category result.

The matching unit may be used to recognize, from at least one template category, the target category result matched with the category result.

The execution unit may be used to execute an operation of determining the target structured model matched with the target category result, in response to determining that the target category result is detected.

According to embodiments of the present disclosure, the apparatus of generating the document may further include a direction recognition module and a rotation correction module.

Before an execution of the structure recognition module, the direction recognition module may be used to recognize an image direction of the document picture, and the rotation correction module may be used to perform a rotation correction on the document picture in response to determining that the image direction is not matched with a target direction.

According to embodiments of the present disclosure, the structure recognition module may include a structure recognition unit and a structure determination unit.

The structure determination unit may be used to perform the structure recognition on the document picture by using the target structured model, so as to determine the structure recognition result from a plurality of initial field structures.

According to embodiments of the present disclosure, the apparatus of generating the document may further include an extraction module and a text recognition module.

After the execution of the structure recognition module, the extraction module may be used to extract a target field text based on the field position recognition result, and the text recognition module may be used to perform a text recognition on the target field text to obtain a text recognition result.

According to embodiments of the present disclosure, the apparatus of generating the document may further include an object detection module and an object determination module.

Before an execution of the category recognition module, the object detection module may be used to perform an object detection on an initial picture to obtain an object position result, and the object determination module may be used to obtain the document picture from the initial picture based on the object position result.

According to embodiments of the present disclosure, the document picture includes a picture of a paper document or a picture of an electronic document.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor, the memory stores instructions executable by the at least one processor, and the instructions, when executed by the at least one processor, cause the at least one processor to implement the method described above.

According to embodiments of the present disclosure, a non-transitory computer-readable storage medium having computer instructions therein is provided, and the computer instructions are configured to cause a computer system to implement the method described above.

According to embodiments of the present disclosure, a computer program product containing a computer program is provided, and the computer program, when executed by a processor, causes the processor to implement the method described above.

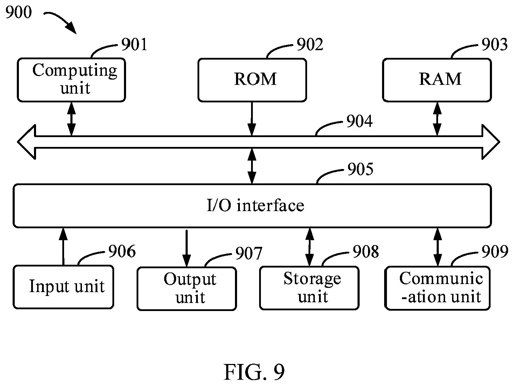

FIG. 9 shows a schematic block diagram of an exemplary electronic device 900 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 9, the electronic device 900 includes a computing unit 901 which may perform various appropriate actions and processes according to a computer program stored in a read only memory (ROM) 902 or a computer program loaded from a storage unit 908 into a random access memory (RAM) 903. In the RAM 903, various programs and data necessary for an operation of the electronic device 900 may also be stored. The computing unit 901, the ROM 902 and the RAM 903 are connected to each other through a bus 904. An input/output (I/O) interface 905 is also connected to the bus 904.

A plurality of components in the electronic device 900 are connected to the I/O interface 905, including: an input unit 906, such as a keyboard, or a mouse; an output unit 907, such as displays or speakers of various types; a storage unit 908, such as a disk, or an optical disc; and a communication unit 909, such as a network card, a modem, or a wireless communication transceiver. The communication unit 909 allows the electronic device 900 to exchange information/data with other devices through a computer network such as Internet and/or various telecommunication networks.

The computing unit 901 may be various general-purpose and/or dedicated processing assemblies having processing and computing capabilities. Some examples of the computing unit 901 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 901 executes various methods and steps described above, such as the method of generating the document. For example, in some embodiments, the method of generating the document may be implemented as a computer software program which is tangibly embodied in a machine-readable medium, such as the storage unit 908. In some embodiments, the computer program may be partially or entirely loaded and/or installed in the electronic device 900 via the ROM 902 and/or the communication unit 909. The computer program, when loaded in the RAM 903 and executed by the computing unit 901, may execute one or more steps in the method of generating the document described above. Alternatively, in other embodiments, the computing unit 901 may be configured to perform the method of generating the document by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, speech input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of generating a document, the method comprising:
performing (S210) a category recognition on a document picture to obtain a target category result;
determining (S220) a target structured model matched with the target category result; and
performing (S230), by using the target structured model, a structure recognition on the document picture to obtain a structure recognition result, so as to generate an electronic document based on the structure recognition result, wherein the structure recognition result comprises a field attribute recognition result and a field position recognition result.

2. The method according to claim 1, wherein the performing a category recognition on a document picture to obtain a target category result comprises:
performing a category recognition on the document picture to obtain a category result;
recognizing, from at least one template category, the target category result matched with the category result; and
executing an operation of determining the target structured model matched with the target category result, in response to determining that the target category result is detected.

3. The method according to claim 1, further comprising: before performing, by using the target structured model, the structure recognition on the document picture to obtain the structure recognition result,
recognizing an image direction of the document picture; and
performing a rotation correction on the document picture in response to determining that the image direction is not matched with a target direction.

4. The method according to claim 1, wherein the performing, by using the target structured model, a structure recognition on the document picture to obtain a structure recognition result comprises:
performing the structure recognition on the document picture by using the target structured model, so as to determine the structure recognition result from a plurality of initial field structures.

5. The method according to claim 1 or 4, further comprising: after performing, by using the target structured model, the structure recognition on the document picture to obtain the structure recognition result,
extracting a target field text based on the field position recognition result; and
performing a text recognition on the target field text to obtain a text recognition result.

6. The method according to claim 1, further comprising: before performing the category recognition on the document picture to obtain the category result,
performing an object detection on an initial picture to obtain an object position result; and
obtaining the document picture from the initial picture based on the object position result.

7. The method according to any one of claims 1 to 6, wherein the document picture comprises a picture of a paper document or a picture of an electronic document.

8. An apparatus (800) of generating a document, the apparatus comprising:
a category recognition module (810) configured to perform a category recognition on a document picture to obtain a target category result;
a model matching module (820) configured to determine a target structured model matched with the target category result; and
a structure recognition module (830) configured to perform, by using the target structured model, a structure recognition on the document picture to obtain a structure recognition result, so as to generate an electronic document based on the structure recognition result, wherein the structure recognition result comprises a field attribute recognition result and a field position recognition result.

9. The apparatus (800) according to claim 8, wherein the category recognition module (810) comprises:
a category recognition unit configured to perform a category recognition on the document picture to obtain a category result;
a matching unit configured to recognize, from at least one template category, the target category result matched with the category result; and
an execution unit configured to execute an operation of determining the target structured model matched with the target category result, in response to determining that the target category result is detected.

10. The apparatus (800) according to claim 8, further comprising: before the structure recognition module (830),
a direction recognition module configured to recognize an image direction of the document picture; and
a rotation correction module configured to perform a rotation correction on the document picture in response to determining that the image direction is not matched with a target direction.

11. The apparatus (800) according to claim 8, wherein the structure recognition module (830) comprises:
a structure determination unit configured to perform the structure recognition on the document picture by using the target structured model, so as to determine the structure recognition result from a plurality of initial field structures,
preferably, the apparatus (800) further comprising: after the structure recognition module (830),
an extraction module configured to extract a target field text based on the field position recognition result; and
a text recognition module configured to perform a text recognition on the target field text to obtain a text recognition result.

12. A platform (700) of generating a document, the platform comprising:
a platform layer (710) configured to train an initial document generation network by using training data, so as to obtain a document generation network, wherein the document generation network is configured to perform a category recognition on a document picture to be processed so as to obtain an application target category result, determine a target structured model matched with the application target category result, and perform, by using the target structured model, a structure recognition on the document picture to be processed so as to obtain an application structure recognition result, wherein the application structure recognition result comprises an application field attribute recognition result and an application field position recognition result;
an atomic model layer (720) configured to construct the initial document generation network; and
a service layer (730) configured to receive the document picture to be processed from a terminal device.

13. An electronic device (900), comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 7.

14. A non-transitory computer-readable storage medium having computer instructions therein, wherein the computer instructions are configured to cause a computer system to implement the method according to any one of claims 1 to 7.

15. A computer program product containing a computer program, wherein the computer program, when executed by a processor, causes the processor to implement the method according to any one of claims 1 to 7.
